# EUROPÄISCHE PATENTSCHRIFT

(11) **EP 1 819 571 B1**
(45) Veröffentlichungstag und Bekanntmachung des Hinweises auf die Patenterteilung: **13.04.2011**
(21) Anmeldenummer: 05813712.6
(22) Anmeldetag: 02.12.2005
(51) Int. Cl.: B62B 3/10

(54) **TRANSPORTGERÄT FÜR HOCHBAUENDES TRANSPORTGUT**
TRANSPORT DEVICE FOR STACKED GOODS REQUIRING TRANSPORT
APPAREIL DE TRANSPORT POUR MARCHANDISE DE GRANDE HAUTEUR

(30) Priorität: 08.12.2004 DE 102004059245
(43) Veröffentlichungstag der Anmeldung: 22.08.2007
(73) Patentinhaber: LKE Gesellschaft für Logistik- und Kommunikations- Equipment mbH, 45768 Marl (DE)
(72) Erfinder: FESER, Robert, 45966 Gladbeck (DE)
(74) Vertreter: Cohausz & Florack
(86) Internationale Anmeldenummer: PCT/EP2005/012941
(87) Internationale Veröffentlichungsnummer: WO 2006/061150

(56) Entgegenhaltungen:
- WO-A-98/24699
- FR-A- 2 636 054
- GB-A- 1 407 209
- US-A- 3 920 258

## Beschreibung

Die Erfindung betrifft ein Transportgerät, das als portalartiges Fahrgestell mit zwei seitlichen Ständern und einem die Ständer oben an ihren Köpfen verbindenden Querhaupt ausgebildet ist und das einen bodenfrei ausgebildeten Aufnahmeraum zwischen den Ständern aufweist, wobei unten an jedem Ständer ein mit Rollen bestücktes Fußstück angeordnet ist, wobei die Rollen mindestens eines der beiden Fußstücke Lenkrollen sind, und die beiden Fußstücke auf jeder Seite des Fahrgestells über einen Querriegel miteinander verbunden sind, der mindestens an einer Seite des Fahrgestells lösbar ist.

In Produktionsstätten für aus mehreren Teilen zusammenbaubaren Gegenständen, beispielsweise einer Fertigungsstraße mit verschiedenen Arbeitsplätzen, werden die an jedem Arbeitsplatz benötigten Teile mittels eines geeigneten Transportgerätes angeliefert. Vorzugsweise sind die benötigten Teile in übereinander gestapelten Kästen auf mit Lenkrollen bestückten Untersätzen angeordnet. Die Untersätze mit den darauf angeordneten Stapelkästen können dann mit einem geeigneten Transportgerät, insbesondere einem Gabelstapler, an den Arbeitsplatz transportiert werden. Dabei ist es üblich, dass zwei nebeneinander angeordnete Untersätze mit darauf angeordneten Stapelkästen gemeinsam transportiert werden. Ein solcher Transport ist aufwendig, weil immer nur zwei Einheiten gleichzeitig mit dem Gabelstapler transportiert werden können. Transportgeräte in Form von ineinander schiebbaren, auf Rollen gelagerten Wagen sind bekannt (DE 22 52 765 C2). Diese Wagen bestehen aus zwei Seitenwänden, die an einem Ende über ein elastisches Zwischenstück über eine Art Zapfen bzw. Klaue miteinander derart verbunden sind, dass die Wände im Grundriss eine trapezförmige Stellung einnehmen können, bei der gleichartige Wagen ineinander geschoben werden können. Eine Wand des Wagens weist einen hochklappbaren Boden auf, der heruntergeklappt an der anderen Wand fixierbar ist und somit die beiden Seitenwände parallel zueinander hält. Der Wagen kann dann mit Stapelware beladen werden. Ein Transportmittel für das eingangs geschilderte Problem des Transportes von mit Lenkrollen bestückten Untersätzen stellt ein solcher Wagen nicht dar.

Aus der WO 98/24699 A ist ein Lenkrollen aufweisender, käfigartiger Transportwagen gemäß dem Oberbegriff von Anspruch 1 bekannt, der für den Transport von Bekleidungsstücken bestimmt ist. Der Transportwagen weist einen im Wesentlichen V-förmig ausgebildeten Grundrahmen auf, an dessen äußeren Enden zwei gegenüberliegende, vertikale Wandelemente angelenkt sind. Am unteren Rand einer der beiden vertikalen Wandelemente ist ein klappbares Bodenelement angelenkt, das in einer Lasttransportposition heruntergeklappt auf am unteren Rand des gegenüberliegenden Wandelements angebrachten Halterungen aufliegt. Im leeren Rückgabezustand des Transportwagens wird dessen Bodenelement in eine vertikale Stellung hochgeklappt. Die beiden vertikalen Wandelemente werden sodann in eine angewinkelte, pflugartige Stellung geschwenkt, in der sie an den Schenkeln des V-förmigen Grundrahmens anliegen. In dieser pflugartigen Stellung können mehrere dieser Transportwagen platzsparend ineinander geschoben werden. Der bekannte Transportwagen weist zudem mehrere an seinen Wandelementen angelenkte Kleiderstangen auf, die in unterschiedlichen Höhen angeordnet sind und aus einer horizontalen Stellung in eine vertikale Stellung und umgekehrt verschwenkt werden können. Für den Transport von mit Lenkrollen bestückten Untersätzen ist dieser Transportwagen nicht vorgesehen.

Des Weiteren ist aus der FR 2 636 054 A ein Hubwagen bekannt, der eine heb- und senkbare Gabel zum Anheben und Transportieren von auf Füßen abgestützten Gegenständen aufweist. Die Hubgabel ist an einem mit Laufrädern versehenen Gestell montiert und innerhalb einer Trägerstruktur angeordnet, die aus zwei parallel zu der Hubgabel verlaufenden Längsträgern gebildet und auf Laufrollen abgestützt ist. Um die Hubgabel auch unter Gegenstände mit relativ niedrigen Füßen einführen zu können, ist bei diesem Hubwagen vorgesehen, dass der jeweilige Längsträger an seinem dem Gestell abgewandten Ende auf einer Lenkrolle abgestützt und an seinem anderen Ende um eine Vertikalachse schwenkbar an dem die Hubgabel tragenden Gestell angelenkt ist, wobei die Längsträger in der abgesenkten Hubgabelstellung im Wesentlichen oberhalb der Hubgabel und in der angehobenen Hubgabelstellung unterhalb der Hubgabel verlaufen. An dem dem Gestell abgewandten Ende der Längsträger ist eine Querstange lösbar angebracht, die zur Transportgutaufnahme entfernt wird, so dass die Längsträger spreizbar sind und die abgesenkte Hubgabel unter das Transportgut geführt werden kann. Die Querstange dient dazu, die Längsträger relativ zur Hubgabel parallel zueinander ausgerichtet zu fixieren. Der Transport mehrerer mit Lenkrollen bestückter Untersätze für darauf hoch bauendes Transportgut ist in der FR 2 636 054 A weder erwähnt noch ist der daraus bekannte Hubwagen für einen solchen Transport bestimmt.

Der vorliegenden Erfindung liegt die Aufgabe zu Grunde, ein Transportgerät zu schaffen, mit dem auf einfache Art und Weise auf Lenkrollen gelagerte Untersätze mit darauf hoch bauendem Transportgut, insbesondere Stapelware, transportiert werden können.

Diese Aufgabe wird durch ein Transportgerät mit den Merkmalen des Anspruchs 1 gelöst. Das erfindungsgemäße Transportgerät ist dadurch gekennzeichnet, dass in den Aufnahmeraum zwischen den Ständern mehrere nebeneinander angeordnete, auf Lenkrollen gelagerte Untersätze für darauf hoch bauendes Transportgut, insbesondere Stapelware, eingefahren sind, und dass die Querriegel im geschlossenen Zustand die Untersätze mit dem Transportgut im Aufnahmeraum halten.

Mit dem erfindungsgemäßen Transportgerät werden die Untersätze mit ihrem Transportgut zu einem Wagen zusammengestellt, wobei die Fahrbarkeit der auf Lenkrollen gelagerten Untersätze genutzt wird. Das portalartige Fahrgestell braucht also nicht die Lasten des Transportgutes zu tragen. Die Lenkrollen der Untersätze ermöglichen die Mitnahme durch das portalartige Fahrgestell in jede Richtung. Die Bestückung des portalartigen Fahrgestells mit den Untersätzen und dem darauf angeordneten Transportgut ist denkbar einfach, da sie nur in das geöffnete portalartige Fahrgestell eingefahren zu werden brauchen. Durch die Querriegel werden sie dann an ihren Einstellplätzen im Aufnahmeraum gehalten.

Nach einer ersten Ausgestaltung ist der lösbare Querriegel an einer Vertikalführung parallel geführt. Insbesondere weist die Vertikalführung eine zwischen den seitlichen Ständern angeordnete und am Querhaupt befestigte Schiene und einen darauf verschiebbar gelagerten, vom Querriegel getragenen Führungsschuh auf.

Vorzugsweise ist die lösbare Verbindung des Querriegels eine Steckverbindung.

Das Einfahren der Untersätze mit dem darauf angeordneten Transportgut in den Aufnahmeraum zwischen den Ständern des Fahrgestells wird erleichtert, wenn die Schienen an ihren unteren Enden über ein Versteifungselement verbunden sind. Auf diese Art und Weise wird der Aufnahmeraum in einzelne Einstellplätze für jeden Untersatz aufgeteilt. Das Einfahren der Untersätze mit dem Transportgut wird weiter erleichtert, wenn die Fußstücke an ihren aneinander zugekehrten Innenseiten Leitkufen für die Untersätze tragen.

Nach einer weiteren Ausgestaltung der Erfindung ist der Querriegel in seiner oberen Position am Querhaupt mittels eines Verriegelungselementes fixierbar. Diese Ausgestaltung ist insbesondere dann vorteilhaft, wenn der Querriegel an einer Vertikalführung parallel geführt ist.

Im Folgenden wird die Erfindung anhand einer ein Ausführungsbeispiel darstellenden Zeichnung näher erläutert. Im einzelnen zeigen:
- Fig. 1: ein Transportgerät ohne die Bestückung mit Untersätzen in perspektivischer Ansicht,

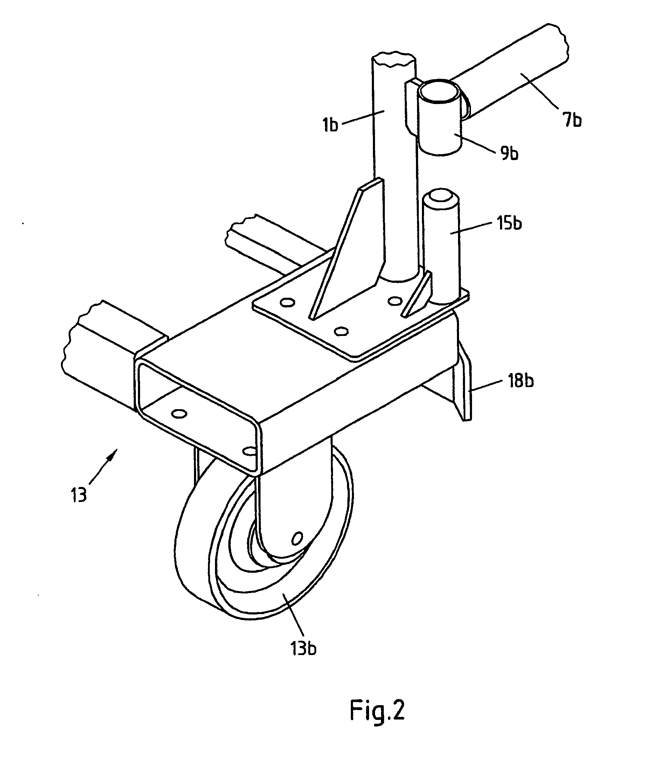

- Fig. 2: ein Teil eines Fußstückes eines Ständers des Transportgerätes gemäß Fig. 1 mit einer Steckverbindung für einen Querriegel in perspektivischer Darstellung und
- Fig. 3: das Transportgerät gemäß Fig. 1 mit auf Untersätzen gestapelten Kästen in perspektivischer Darstellung.

Das Transportgerät ist als ein portalartiges Fahrgestell mit zwei seitlichen Ständern 1a, 1b, 2a, 2b und einem die Ständer 1a, 1b, 2a, 2b oben an ihren Köpfen verbindenden Querhaupt 3a, 3b ausgebildet. Das Querhaupt 3a, 3b ist über eine mittige Stange 4 ausgesteift.

Das Querhaupt 3a, 3b trägt als erstes Teil einer Vertikalführung zwischen den Ständern 1a, 2a, 1b, 2b angeordnete Schienen 5a, 5b, die an ihren unteren Enden über ein Versteifungselement 6 miteinander verbunden sind. Auf den Schienen 5a, 5b ist ein Querriegel 7a, 7b mittels eines Führungsschuhs 8a, 8b als weiteres Teil der Vertikalführung parallel verschiebbar gelagert. Die Enden des Querriegels 7a, 7b tragen als Teile von Steckverbindungen Hülsen 9a, 9b, 10a, 10b. Die Querriegel 7a, 7b sind in ihrer oberen Position mit einem Verriegelungsmechanismus 11a, 11b, 12a, 12b am Querhaupt 3a, 3b fixierbar.

Die beiden Ständer 1a, 1b, 2a, 2b weisen an ihren unteren Enden Fußstücke 13, 14 auf, von denen das Fußstück 13 mit einfachen Rollen 13a, 13b und das Fußstück 14 mit Lenkrollen 14a, 14b bestückt ist. Außerdem tragen die Fußstücke 13, 14 als weitere Teile der Steckverbindungen Stifte 15a, 15b, 16a, 16b, auf die die Hülsen 9a, 9b, 10a, 10b der Steckverbindungen aufsteckbar sind. Ferner weisen die Fußstücke 13, 14 Gleitkufen 18a, 18b, 19a, 19b auf. Schließlich weisen die beiden Fußstücke 13, 14 einander korrespondierende Kupplungen auf. So weist das Fußstück 13 eine um eine horizontale Achse verschwenkbare Deichsel 20 und das Fußstück 14 ein für die Deichsel 20 geeignetes Kupplungsstück 21 auf.

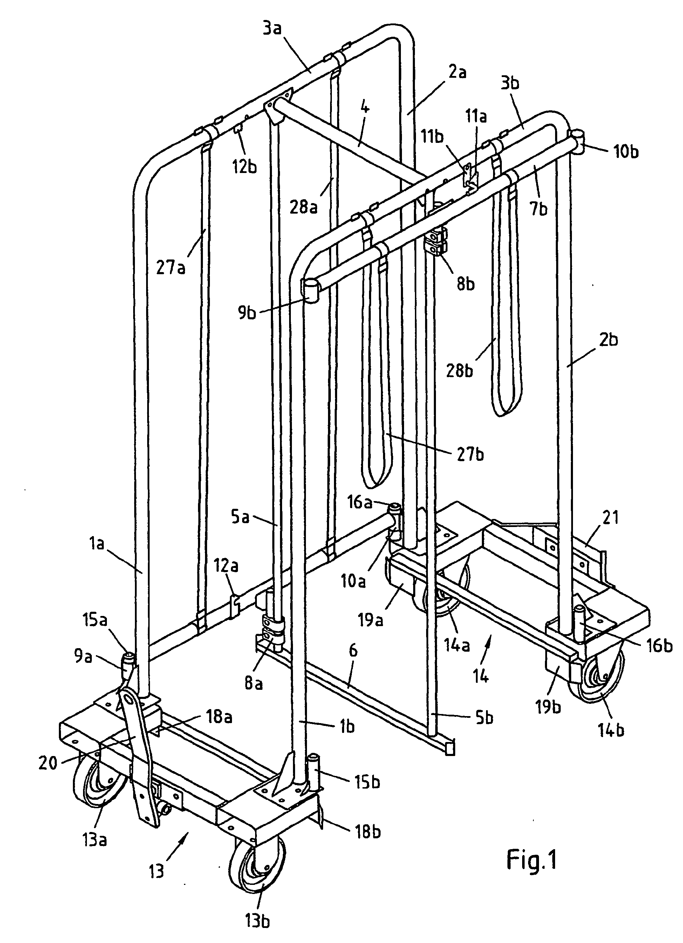

Das Transportgerät kann bei hochgeschobenen Querriegeln 7a, 7b von seinen beiden Seiten aus mit Untersätzen mit darauf abgestelltem Transportgut bestückt werden. Befindet sich, wie in Fig. 1 dargestellt, der eine Querriegel 7a in seiner unteren eingesteckten Position, dann kann das Transportgerät nur von der in der Zeichnung dargestellten Vorderseite bestückt werden.

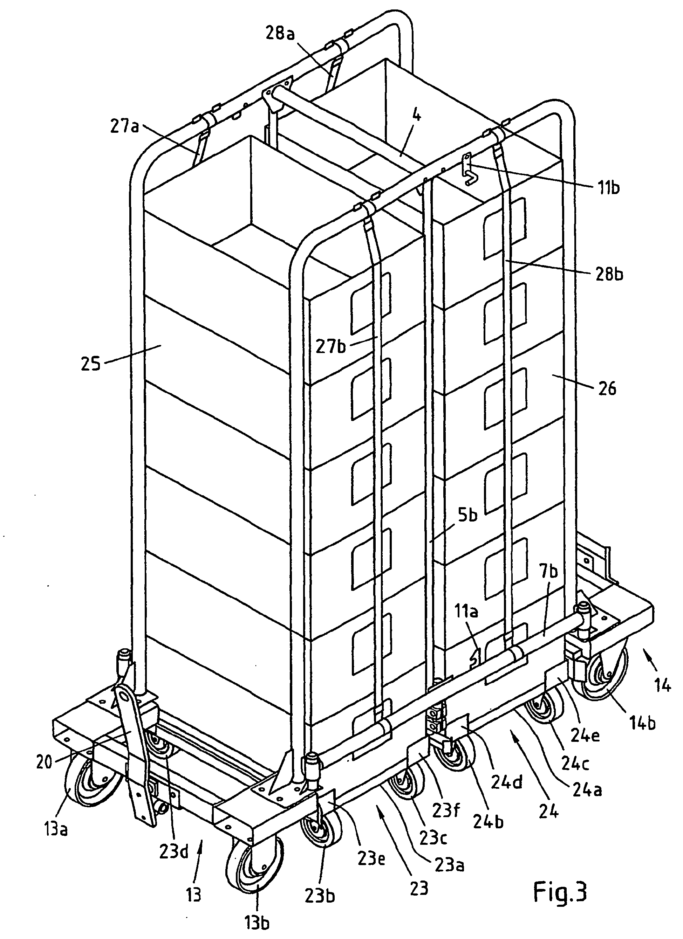

Wie aus Fig. 3 zu entnehmen ist, bestehen die Untersätze 23, 24 aus Platten 23a, 24a mit unterseitig angeordneten Lenkrollen 23b, 23c, 23d, 24b, 24c. Auf den Untersätzen 23, 24 ist hoch bauendes Transportgut, insbesondere gestapelte Kästen 25, 26, abgestellt. Die Kästen 25, 26 werden von an den Platten 23a, 24a angeordneten Laschen 23e, 23f, 24d, 24e gehalten. Sobald die beiden Untersätze 23, 24 mit den darauf gestapelten Kästen 25, 26 in den seitlich von den Ständern 1a, 1b, 2a, 2b begrenzten und mittig von den Schienen 5a, 5b mit ihrem Versteifungselement 6 unterteilten Aufnahmeraum eingefahren sind, wird der vordere Querriegel 7b nach unten verschoben und über seine Steckverbindung 9b, 10b, 15b, 16b verriegelt. Die Untersätze 23, 24 mit den darauf gestapelten Kästen 25, 26 sind dann zum einen durch die seitlichen Ständer 1a, 1b, 2a, 2b und zum anderen durch die beiden Riegel 7a, 7b im Fahrgestell fest positioniert. Zusätzlich können sie noch durch Spannbänder 27a, 27b, 28a, 28b fixiert werden.

Nach Bestückung des Transportgerätes mit den Untersätzen 23, 24 und den darauf abgestellten Kästen 25, 26 und Schließen der Querriegel 7a, 7b kann das bestückte Transportgerät wie ein Wagen verfahren werden. Es kann mit anderen insbesondere gleichartigen Transportgeräten zu einem Zug zusammengestellt werden. Die Lenkrollen 14a, 14b des Fahrgestells in Verbindung mit den Lenkrollen 23b, 23c, 23d, 24b, 24c der Untersätze 23, 24 und die nicht lenkbaren Rollen 13a, 13b des Fahrgestells halten dabei die gesamte Transporteinheit wie bei einem vierrädrigen Wagen mit einseitigen Lenkrollen in der Spur. Das portalartige Fahrgestell braucht keine Lasten zu tragen, da die Lasten von den einzelnen Untersätzen getragen werden. Es hat nur die Aufgabe, die Untersätze mit der darauf abgestellten Last zusammenzuhalten.

## Patentansprüche

1. Transportgerät, das als portalartiges Fahrgestell mit zwei seitlichen Ständern (1a, 1b, 2a, 2b) und einem die Ständer (1a, 1b, 2a, 2b) oben an ihren Köpfen verbindenden Querhaupt (3a, 3b) ausgebildet ist und das einen bodenfrei ausgebildeten Aufnahmeraum zwischen den Ständern (1a, 1b, 2a, 2b) aufweist, wobei unten an jedem Ständer (1a, 1b, 2a, 2b) ein mit Rollen (13a, 13b, 14a, 14b) bestücktes Fußstück (13, 14) angeordnet ist, wobei die Rollen mindestens eines der beiden Fußstücke (13, 14) Lenkrollen (14a, 14b) sind, und die beiden Fußstücke (13, 14) auf jeder Seite des Fahrgestells über einen Querriegel (7a, 7b) miteinander verbunden sind, der mindestens an einer Seite des Fahrgestells lösbar ist, **dadurch gekennzeichnet, dass** in den Aufnahmeraum zwischen den Ständern (1a, 1b, 2a, 2b) mehrere nebeneinander angeordnete, auf Lenkrollen (23b, 23c, 23d, 24b, 24c) gelagerte Untersätze (23, 24) für darauf hoch bauendes Transportgut (25, 26), insbesondere Stapelware, eingefahren sind, und dass die Querriegel (7a, 7b) im geschlossenen Zustand die Untersätze (23, 24) mit dem Transportgut (25, 26) im Aufnahmeraum halten.

2. Transportgerät nach Anspruch 1, **dadurch gekennzeichnet, dass** jeder lösbare Querriegel (7a, 7b) an einer Vertikalführung (5a, 5b, 8a, 8b) parallel geführt ist.

3. Transportgerät nach Anspruch 2, **dadurch gekennzeichnet, dass** jede Vertikalführung (5a,5b,8a, 8b) eine zwischen den seitlichen Ständern (1a, 1b, 2a, 2b) angeordnete und am Querhaupt (3a, 3b) befestigte Schiene (5a, 5b) und einen darauf verschiebbar gelagerten, vom Querriegel (7a, 7b) getragenen Führungsschuh (8a, 8b) aufweist.

4. Transportgerät nach einem der Ansprüche 1 bis 3, **dadurch gekennzeichnet, dass** die lösbare Verbindung des Querriegels (7a, 7b) eine Steckverbindung (9a, 9b, 10a, 10b, 15a, 15b, 16a, 16b) ist.

5. Transportgerät nach Anspruch 3, **dadurch gekennzeichnet, dass** die Schienen (5a, 5b) an ihren unteren Enden über ein Versteifungselement (6) miteinander verbunden sind.

6. Transportgerät nach einem der Ansprüche 1 bis 5, **dadurch gekennzeichnet, dass** die Fußstücke (13, 14) an ihren einander zugekehrten Innenseiten Gleitkufen (18a, 18b, 19a, 19b) für die Untersätze (23, 24) tragen.

7. Transportgerät nach einem der Ansprüche 1 bis 6, **dadurch gekennzeichnet, dass** jeder Querriegel (7a, 7b) in seiner oberen Position am Querhaupt (3a, 3b) mittels eines Verriegelungselementes (11a, 11b, 12a,12b) fixierbar ist.

8. Transportgerät nach einem der Ansprüche 1 bis 7, **dadurch gekennzeichnet, dass** das eine Fußstück (13) eine um eine horizontale Achse verschwenkbare Deichsel (20) und das andere Fußstück (14) ein für die Deichsel (20) geeignetes Kupplungsstück (21) aufweist.

## Claims

1. A transport device embodied as a gantry-type chassis comprising two lateral posts (1a, 1b, 2a, 2b) as well as a crosshead (3a, 3b) connecting the posts (1a, 1b, 2a, 2b) on top at their heads and having a bottomless receiving space between the posts (1a, 1b, 2a, 2b), wherein at the bottom of each post (1a, 1b, 2a, 2b) a base part (13, 14) is provided which is equipped with rollers (13a, 13b, 14a, 14b), wherein the rollers of at least one of the two base parts (13, 14) are swivel casters (14a, 14b), and the two base parts (13, 14) on each side of the chassis being connected by means of a crossbar (7a, 7b) which can be detached at least on one side of the chassis, **characterized in that** several bases (23, 24) arranged side-by-side and supported on swivel casters (23b, 23c, 23d, 24b, 24c) are inserted into the receiving space between the posts (1a, 1b, 2a, 2b), which bases are used for goods (25, 26) to be transported stacked thereon in high piles, in particular for stackable goods, and that the crossbars (7a, 7b) in their closed position retain the bases (23, 24) with the goods to be transported (25, 26) in the receiving space.

2. The transport device according to claim 1, **characterized in that** each of the detachable crossbars (7a, 7b) is guided in parallel on a vertical guide (5a, 5b, 8a, 8b).

3. The transport device according to claim 2, **characterized in that** each of the vertical guides (5a, 5b, 8a, 8b) comprises a rail (5a, 5b) arranged between the lateral posts (1a, 1b, 2a, 2b) and attached to the crosshead (3a, 3b) as well as a guide shoe (8a, 8b) supported slidably on the rail and carried by the crossbar (7a, 7b).

4. The transport device according to one of claims 1 to 3, **characterized in that** the detachable connection of the crossbar (7a, 7b) is a push-on connection (9a, 9b, 10a, 10b, 15a, 15b, 16a, 16b).

5. The transport device according to claim 3, **characterized in that** the rails (5a, 5b) are connected to one another at their bottom ends through a stiffening element (6).

6. The transport device according to one of claims 1 to 5, **characterized in that** the base parts (13, 14) carry sliding strips (18a, 18b, 19a, 19b) for the bases (23, 24) at their inner sides facing one another.

7. The transport device according to one of claims 1 to 6, **characterized in that** each of the crossbars (7a, 7b) can be fixed to the crosshead (3a, 3b) in its upper position by means of a locking element (11a, 11b, 12a, 12b).

8. The transport device according to one of claims 1 to 7, **characterized in that** one of the base parts (13) comprises a drawbar (20) pivotable around a horizontal axis and the other one of the base parts (14) comprises a coupling part (21) appropriate for the drawbar (20).

## Revendications

1. Dispositif de transport, qui est réalisé en forme de châssis, genre portique, avec deux montants latéraux (1a, 1b, 2a, 2b) et une traverse (3a, 3b), qui relie, en haut, les montants (1a, 1b, 2a, 2b), par leurs têtes, et qui présente, entre les montants latéraux (1a, 1b, 2a, 2b), un espace de réception sans fond, sachant que chaque montant (1a, 1b, 2a, 2b) est équipé, en bas, d'un élément de pied (13, 14) pourvu de roulettes (13a, 13b, 14a, 14b), sachant que les roulettes au moins d'un des éléments de pied (13, 14) sont roulettes orientables (14a, 14b), et que les deux éléments de pied (13, 14) sont reliés ensemble, sur chaque côté du châssis, par l'intermédiaire d'un système de verrouillage transversal (7a, 7b), qui peut être libéré sur au moins l'un des côtés du châssis, **caractérisé en ce que**, dans l'espace de réception sont conduits plusieurs supports de charges (23, 24), qui, disposés entre les montants (1a, 1b, 2a, 2b) et montés sur des roulettes orientables (23b, 23c, 23d, 24b, 24c), sont destinés à recevoir des marchandises à transporter (25, 26), en particulier des marchandises empilables, et que le système de verrouillage transversal (7a, 7b), à l'état fermé, maintient dans l'espace de réception les supports (23, 24) avec les marchandises à transporter (25, 26).

2. Dispositif de transport selon la revendication 1, **caractérisé en ce que** chaque système de verrouillage transversal (7a, 7b) démontable est guidé parallèlement sur un dispositif de guidage vertical (5a, 5b, 8a, 8b).

3. Dispositif de transport selon la revendication 2, **caractérisé en ce que** chaque dispositif de guidage vertical (5a, 5b, 8a, 8b) présente un rail (5a, 5b), qui est disposé entre les montants latéraux (1a, 1b, 2a, 2b) et fixé à la traverse (3a, 3b), et un sabot de guidage (8a, 8b), qui, porté par le système de verrouillage transversal (7a, 7b) est monté mobile sur ledit rail.

4. Dispositif de transport selon l'une des revendications 1 à 3, **caractérisé en ce que** la liaison démontable du système de verrouillage transversal (7a, 7b) est une liaison par emboîtage (9a, 9b. 10a. 10b, 15a, 15b, 16a, 16b) .

5. Dispositif de transport selon la revendication 3, **caractérisé en ce que** les rails (5a, 5b) sont reliés ensemble, à leurs extrémités inférieures, par l'intermédiaire d'un élément de renforcement (6).

6. Dispositif de transport selon l'une des revendications 1 à 5, **caractérisé en ce que** les éléments de pied (13, 14) portent, sur leurs faces intérieures, orientées l'une vers l'autre, des coussins de glissement (18a, 18b, 19a, 19b) pour les supports de charges (23, 24).

7. Dispositif de transport selon l'une des revendications 1 à 6, **caractérisé en ce que** chaque système de verrouillage transversal (7a, 7b) peut être fixé dans sa position supérieure sur la traverse (3a, 3b) au moyen d'un élément de verrouillage (11a, 11b, 12a, 12b).

8. Dispositif de transport selon l'une des revendications 1 à 7, **caractérisé en ce qu'**un élément de pied (13) présente un timon (20), qui peut pivoter sur un axe horizontal et que l'autre élément de pied (14) présente une pièce de couplage (21) appropriée au timon (20).
